# EUROPEAN PATENT SPECIFICATION

(11) **EP 2 851 237 B1**
(45) Date of publication and mention of the grant of the patent: **13.06.2018**
(21) Application number: 14000299.9
(22) Date of filing: 28.01.2014
(51) Int. Cl.: B60N 2/28, B60N 2/42, B60N 2/427

(54) **Child safety seat**
Kindersicherheitssitz
Siège de sécurité enfant

(30) Priority: 18.09.2013 EP 13004564
(43) Date of publication of application: 25.03.2015
(73) Proprietor: Britax Römer Kindersicherheit GmbH, 89340 Leipheim (DE)
(72) Inventor: Haas, Martin, 89555 Steinheim (DE); Frank, Richard, 89275 Elchingen (DE); Henseler, Richard, 89081 Ulm (DE)
(74) Representative: Bosch, Matthias

(56) References cited:
- WO-A1-2009/062505
- WO-A2-2007/103641
- GB-A- 2 444 605
- GB-A- 2 471 679

## Description

The present invention relates to a child safety seat and, more particularly, to a child safety seat for use in a vehicle, the child safety seat being designed to increase the level of protection provided to a child seated in the child safety seat. The child safety seat is designed to offer improved protection in various crash configurations, in particular in crash configurations involving a front impact and, advantageously, a side impact.

Several types of child safety seats are known in the art. A first type of child safety seats is configured to be secured to a vehicle by means of a safety belt provided in the vehicle. A second type of child safety seats comprises dedicated fastening members which are specifically designed to be fastened to anchoring points, such as ISOFIX anchors, provided in the vehicle for safe installation of the child safety seat in the vehicle. The present invention relates to child safety seats of the second type. Generally, these child safety seats may also be configured to allow a user to choose between fixing the child safety seat to the vehicle by means of the dedicated fastening members or by means of a safety belt of the vehicle. If the user decides to make use of a safety belt of the vehicle, the dedicated fastening members will not be used.

In some of these child safety seats the fastening members are attached to the respective child safety seat by a strap or belt in such a way that the fastening members can be pulled away from the child safety seat to allow the fastening members to be conveniently and easily attached to the anchoring points of the vehicle. After attaching the fastening members to the anchoring points, the child safety seat is firmly installed in the vehicle by manually retracting the fastening members into the child safety seat.

While such a child safety seat permits easy installation of the child safety seat in a vehicle, the strap or belt used to attach the fastening members to the child safety seat may adversely affect the dynamics of the child safety seat during a crash of the vehicle carrying the child safety seat
WO 2009/062505 A1 describes a child seat to be mounted in a vehicle, and being secured via a displaceable support so that, in case of a collision, the child seat will be displaced forwardly to reduce the impact force to which the child is subjected. The support comprises 5 a resilient member in a housing. The resilient member is disposed between a fixed front side of the housing and a pressure arm extending up through an opening in the housing. The child seat is secured on the pressure arm such that, in case of a collision, the child seat may be moved forwardly while the pressure arm deforms the resilient member.

WO 2007/103641 A2 is directed to a harness system including energy-absorbing regions into the construction of the harness to allow some release or extension of the harness during use. The energy-absorbing regions of the harness are formed using an energy-absorbing webbing in a given region or regions to permit the webbing to extend or elongate so that strong forces are not fully and directly imparted to the child. The energy-absorbing region 15 may be installed at various positions within a child safety seat and harness system and may be incorporated into the child safety harness as original equipment or as a retrofit feature.

GB 2 444 605 A relates to a child safety seat tether anchor for securing a child safety seat to a mounting portion of a vehicle. The child safety tether anchor comprises a metal strip 20 which is coupled with the child safety seat and is engaged with an engagement structure having a plurality of pins. The metal strip is bent by the pins and, when the tension exceeds a predetermined level, the metal strip slides while bending around the pins between a retracted configuration and an extended configuration, so as to absorb energy in the event of a crash or collision. Therefore, it is an object of the present invention to improve the crash performance of a child safety seat of the type described above.

This object is solved by the child safety seat in accordance with the present invention with the features of claim 1. Advantageous embodiments of the present invention are indicated in dependent claims 2-11.

The child safety seat of the invention comprises a base portion configured to support a child, a releasable connector configured to be attached to an anchoring point provided in a vehicle in order to secure the child safety seat to the vehicle, and a flexible attachment means connecting the releasable connector to the base portion. The child safety seat of the invention further comprises a deformable member which is configured to be deformed upon application of a pulling force exceeding a preset threshold on the releasable connector in a direction facing away from the base portion, wherein the pulling force is at least partially transferred to the deformable member via the flexible attachment means. The child safety seat of the invention is characterized in that the base portion comprises deflection elements around which the flexible attachment means is guided.

By providing the child safety seat of the invention with a deformable member as specified above, during a crash, crash energy can be systematically dissipated by deformation of the deformable member. Since the deformable member is configured to be deformed only if the pulling force exerted on the releasable connector exceeds a preset threshold, it can be ensured that the deformable member will not be deformed during normal operation of the child safety seat but only during a crash. Furthermore, since the releasable connector is connected to the base portion of the child safety seat by the flexible attachment means, a crash-induced force acting on the releasable connector will be transferred to the child safety seat via the flexible attachment means. Therefore, it is advantageous to provide for the pulling force to be transferred to the deformable member via the flexible attachment means since the deformable member will then be subjected to the pulling force as it is transferred from the releasable connector to the child safety seat.

The deformable member of the child safety seat of the invention is configured to be plastically or elastically deformed by exertion of a suitable force on the deformable member. In the case of plastic deformation, crash energy will be dissipated by deformation of the deformable member. In the case of elastic deformation, deformation of the deformable member will not result in considerable dissipation of energy. Nevertheless, also in this case, deformation of the deformable member may be used to cushion impact forces. Furthermore, friction effects, such as friction between the flexible attachment means and other components of the child safety seat, may be used to dissipate energy during a crash.

The child safety seat of the invention may comprise one or more releasable connectors and one or more deformable members. Advantageously, the child safety seat of the invention comprises two releasable connectors which are connected to a single flexible attachment means, such as a strap or a belt. Preferably, a first releasable connector is attached to the first end of the flexible attachment means and a second releasable connector is attached to the second end of the flexible attachment means. A middle section of the flexible attachment means is advantageously arranged inside the base portion of the child safety seat of the invention, whereas the end sections of the flexible attachment means are configured to protrude from the base portion. Advantageously, a tensioning belt is attached to the center of the flexible attachment means to allow the flexible attachment means to be tensioned by exertion of a pulling force on the tensioning belt.

The tensioning belt may be firmly attached to the flexible attachment means, for example by stitching or riveting or gluing. Alternatively, the tensioning belt may be slidably attached to the flexible attachment means, for example by forming a loop at one end of the tensioning belt and running the flexible attachment means through the loop of the tensioning belt. With this second alternative, the releasable connectors attached to both ends of the flexible attachment means can project from the child safety seat to a different extent, i.e. one releasable connector may extend further from the child safety seat than the other releasable connector. This might be advantageous in an installation environment favoring or requiring an asymmetric configuration of the releasable connectors.

The child safety seat of the invention may comprise more than one flexible attachment means. The child safety seat then preferably comprises two flexible attachment means with one releasable connector connected to each of the flexible attachment means. With this configuration of the child safety seat, the position of each of the releasable connectors can be adjusted independently from the position of the other releasable connector, i.e. the position of the first releasable connector does not influence the position of the second releasable connector and vice versa. The child safety seat preferably comprises a locking device for locking the flexible attachment means or the tensioning belt. If each of the releasable connectors is connected to a separate flexible attachment means, both flexible attachment means may be locked by a single locking device. Alternatively, the child safety seat may comprise two locking devices, each of these locking devices being configured to lock one of the flexible attachment means.

By providing the base portion with deflection elements and by guiding the flexible attachment means around these deflection elements, the path of the flexible attachment means can be conveniently configured. In particular, the deflection elements are conveniently adapted to guide the flexible attachment means from a central part of the base portion to both sides of the base portion, i.e. to the right side of the base portion and to the left side of the base portion. Advantageously, the deflection elements are provided inside the base portion. The flexible attachment means which is guided around the deflection elements will then also be arranged mostly inside the base portion. As a result, the flexible attachment means will be protected from being damaged. Preferably, the base portion comprises a hollow body with the deflection elements arranged inside the hollow body.

Advantageously, the deflection elements are symmetrically arranged in the base portion of the child safety seat of the invention. A first group of deflection elements is preferably arranged in the left half of the base portion and a second group of deflection elements is preferably arranged in the right half of the base portion. Advantageously, a first deformable member or a first group of deformable members is associated with the first group of deflection elements and a second deformable member or a second group of deformable members is associated with the second group of deflection elements.

Advantageously, the deformable member of the child safety seat of the invention is configured to interact with at least one of the deflection elements. By having a deformable member interact with a deflection element, a force acting on the flexible attachment means can be conveniently transferred to the deformable member. Upon application of a suitable force the deformable member will be deformed, thus dissipating energy.

In the child safety seat of the invention a deformable member is preferably integrated into at least one of the deflection elements. By integrating a deformable member into a deflection element the structural complexity of the child safety seat of the invention can be reduced. In a preferred embodiment of the invention a bendable pole serves as deflection element with integrated deformable member. The flexible attachment means will then be guided around the bendable pole and by application of a suitable force the bendable pole will be bent from its normal upright position into a deformed or deflected position.

In the child safety seat of the invention at least one of the deflection elements is advantageously configured to be displaceable in such a way that by displacing the deflection element the deformable member gets deformed. The deformable member will then preferably be configured to counteract the displacement of the displaceable deflection element. The more the displaceable deflection element is displaced, the more the deformable member will be deformed. A force acting on the flexible attachment means can then be transferred from the flexible attachment means to the deflection element and will seek to displace the deflection element against the opposing force of the deformable member.

In the child safety seat of the invention the deflection elements are preferably mounted on a spring loaded rotary member. The spring loaded rotary member is mounted to be rotated about an axis of rotation in a first rotational direction and in a second rotational direction, opposite to the first rotational direction. The deformable member is advantageously adapted to act as spring which biases the spring loaded member in the first rotational direction. The deflection elements are preferably arranged on the spring loaded rotary member in such a way that when the flexible attachment means is being tensioned, a torque acting on the rotary member is generated which tends to rotate the rotary member in the second rotational direction. Such a rotation of the rotary member in the second rotational direction is countered by the deformable member. As a result, a tensioning force acting on the flexible attachment means can be cushioned by a rotation of the rotary member. The characteristics of this cushioning effect can be adjusted by choosing a specific deformable member or by varying the positions of the deflection elements.

The deflection elements of the child safety seat of the invention advantageously comprise a twistable slotted member. The twistable slotted member is preferably mounted to the base portion of the child safety seat of the invention in such a way that the flexible attachment means can be guided through the slot of the twistable slotted member. Furthermore, the twistable slotted member is advantageously arranged to deflect the flexible attachment means from a short straight path to an extended deflected path when the flexible attachment means is guided through the slot of the twistable slotted member. When a tensioning force is exerted on the flexible attachment means, a torque will be generated which acts on the twistable slotted member to twist the twistable slotted member. As a result, the tensioning force will be cushioned.

The deflection elements of the child safety seat of the invention advantageously comprise a slidable spring loaded member. Sliding of the slidable spring loaded member is preferably counteracted by the deformable member. Therefore, when the slidable spring loaded member is slid, the deformable member will be deformed. Preferably, sliding of the slidable spring loaded member is configured to be initiated by a tensioning force acting on the flexible attachment means. The slidable spring loaded member is configured to perform a simple linear movement. Such a simple linear movement is optimally suited to efficiently deform the deformable member.

In the child safety seat of the invention the deformable member is advantageously integrated into the flexible attachment means. This will result in a particularly simple setup. If the deformable member is integrated into the flexible attachment means, a tensioning force acting on the flexible attachment means can be directly guided into the deformable member. Thus, the pulling force can be efficiently cushioned by deformation of the deformable member.

The deformable member of the child safety seat of the invention advantageously comprises a spring or a foam-like structure. The foam-like structure preferably comprises thermoplastics or alternative structural elements with damping characteristics. The child safety seat of the invention may comprise several deformable members of various types. Some of these deformable members might be integrated into the flexible attachment means whereas others might be integrated into some or all of the deflection elements or be configured to interact with some or all of the deflection elements.

The flexible attachment means of the child safety seat of the invention preferably comprises a section which is extendable upon application of a tension exceeding a predetermined value. This section preferably comprises a deformable member in the form of a ripping section. In the ripping section the flexible attachment means ins advantageously folded into loops which are connected to each other at their base, preferably by stitching. The ripping section is configured to be ripped open when a tensioning force of sufficient strength is exerted on the flexible attachment means, thus lengthening the flexible attachment means. By ripping open the ripping section of the flexible attachment means energy will be dissipated.

In the child safety seat of the invention the releasable connector advantageously comprises a guiding member which is slidably guided in the base portion and which is configured to interact with the base portion in such a way that lateral and/or vertical forces acting on the releasable connector are transferred from the releasable connector via the guiding member to the base portion. With such a guiding member the crash behavior of the child safety seat of the invention in crash configurations involving a side impact can be improved. Since lateral and/or vertical forces acting on the releasable connector will be transferred by the guiding member to the base portion, with respect to lateral and/or vertical forces, the guiding member couples the releasable connector to the base portion of the child safety seat. Thus the guiding member of the releasable connector will help to control the dynamics of the base portion, and therefore of the child safety seat, during a side impact.

According to another aspect of the invention a child safety seat is provided which comprises a base portion configured to support a child, releasable connectors configured to be attached to anchoring points provided in a vehicle in order to secure the child safety seat to the vehicle, and flexible attachment means connecting the releasable connectors to the base portion, wherein the base portion comprises deflection elements around which the flexible attachment means are guided and wherein the deflection elements are configured to be deformed or deflected upon application of a tension exceeding a predetermined value on the flexible attachment means. The deflection elements of the child safety seat of the invention preferably comprise a spring loaded rotary plate or a twistable slotted member or a slidable spring loaded member or any combination thereof. The flexible attachment means of the child safety seat of the invention advantageously comprise a section which is extendable upon application of a tension exceeding a predetermined value. The releasable connectors of the child safety seat of the invention preferably comprise a guiding member which is slidably guided in the base portion and which is configured to interact with the base portion in such a way that lateral and/or vertical forces acting on the releasable connectors are transferred from the releasable connectors via the guiding member to the base portion.

Specific embodiments of the invention will now be described by way of example and with reference to the accompanying drawings, in which:
Fig. 1a is a perspective view of a lower part of a child safety seat in accordance with a first embodiment of the invention;
Fig. 1b is another perspective view of the lower part of the child safety seat of Fig. 1a;
Fig. 2 is a perspective view of the lower part of the child safety seat of Figs. 1a and 1b with an upper component of the lower part of the child safety seat removed to show how an inner belt is routed inside the lower part of the child safety seat;
Fig. 3 is a perspective view similar to the view of Fig. 2 showing an alternative routing of the inner belt in accordance with another embodiment of the invention in which the inner belt is guided across spring loaded rotary plates;
Fig. 4 is a perspective view similar to the view of Fig. 2 showing an alternative routing of the inner belt in accordance with another embodiment of the invention in which the inner belt is guided through twistable poles;
Fig. 5 is a perspective view similar to the view of Fig. 2 showing an alternative routing of the inner belt in accordance with another embodiment of the invention in which the inner belt is guided past spring loaded deflection points;
Fig. 6 is a perspective view similar to the view of Fig. 2 showing an alternative routing of the inner belt in accordance with another embodiment of the invention in which the length of the inner belt is configured to be extended if a load acting on the belt exceeds a predetermined value;
Fig. 7 is a side view of a section of a child safety seat in accordance with another embodiment of the invention showing that a releasable connector is slidably mounted to the child safety seat;
Fig. 8 is a perspective view of the releasable connector of Fig. 7;
Fig. 9 is a back view of a section of the child safety seat of Fig. 7 showing the releasable connector of Fig. 8 arranged in an aperture provided in the child safety seat configured to receive the releasable connector;
Fig. 10a is a perspective view of a releasable connector of a child safety seat in accordance with another embodiment of the invention with a guiding section having a rectangular cross section;
Fig. 10b is a perspective view of a releasable connector of a child safety seat in accordance with another embodiment of the invention with a guiding section having a T-shaped cross section;
Fig. 10c is a perspective view of a releasable connector of a child safety seat in accordance with another embodiment of the invention with a guiding section having a cross shaped cross section; and
Fig. 10d is a perspective view of a releasable connector of a child safety seat in accordance with another embodiment of the invention with a guiding section having a U-shaped cross section.

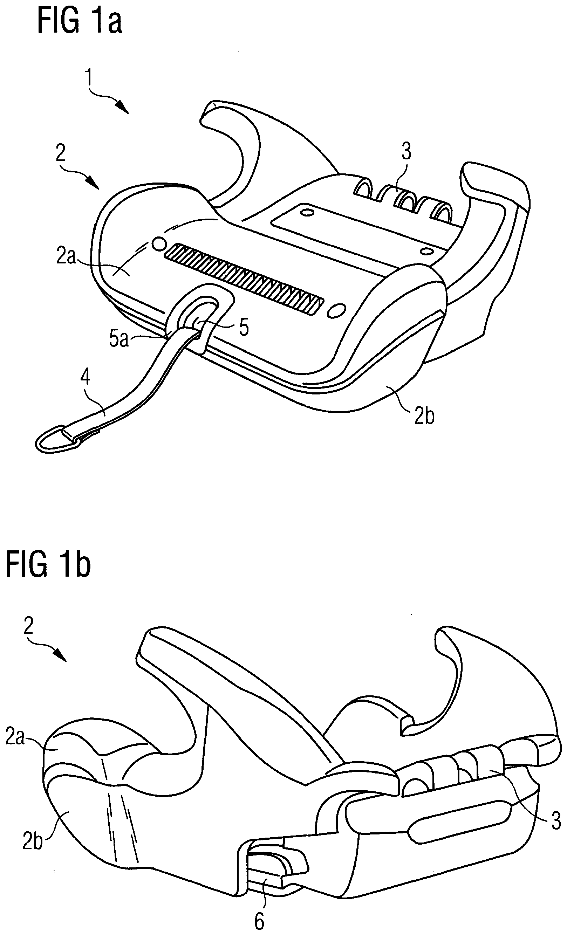

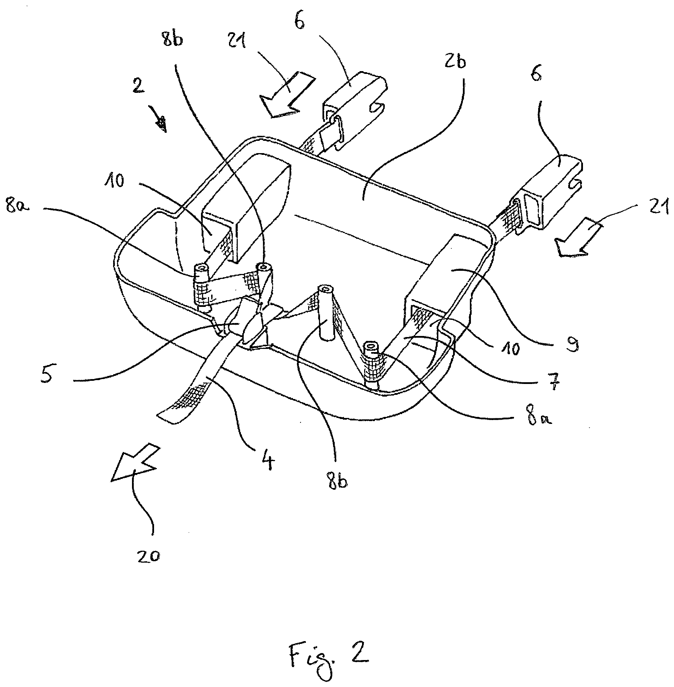

Figure 1a shows a lower part or base portion 2 of a child safety seat 1 in accordance with a first embodiment of the invention. The lower part 2 of the child safety seat 1 comprises a hinge section 3 which is configured to allow a backrest (not shown) to be attached to the lower part 2. The child safety seat 1 comprising the lower part 2 and the backrest is adapted to safely transport a child in a vehicle. The lower part 2 which will then serve as seat surface is configured to raise or boost the child. Therefore, the lower part 2 of the child safety seat 1 may also be referred to as "booster". The lower part 2 comprises an upper component 2a and a lower component 2b. The upper component 2a and the lower component 2b are preferably made from a molded thermoplastic material and are designed to enclose a hollow space. This hollow space enclosed by the upper component 2a and the lower component 2b is advantageously used to house an inner belt which is routed inside the hollow space in a specific way as shown in Figures 2-6.

The lower part 2 furthermore comprises a tensioning belt 4, a locking device 5, and an outlet 5a. The outlet 5a is centrally located at the front of the lower part 2 and is configured to allow the tensioning belt 4 to be guided from the hollow space enclosed by the upper component 2a and the lower component 2b through the outlet 5a to the outside of the lower part 2. The locking device 5 is arranged inside the outlet 5a and is adapted to lock the tensioning belt 4. Preferably, the locking device 5 is a releasable one-way lock which, when locked, prevents the tensioning belt 4 from being pulled into the lower part 2 of the child safety seat 1 but, at the same time, allows the tensioning belt 4 to be pulled from the lower part 2. Therefore, when the releasable one-way lock is locked, the tensioning belt 4 can be pulled only in one direction. In contrast, when the releasable one-way lock is released, the tensioning belt 4 can be pulled in both directions, i.e. out of the lower part 2 and into the lower part 2.

Figure 1b shows a section of the lower part 2 of the child safety seat 1 of Figure 1a from another angle. In Figure 1b the back of the lower part 2 is shown. The lower part 2 comprises a releasable connector 6 which is arranged on the left side of the lower component 2b of the lower part 2. A second releasable connector (not shown) is provided on the right side of the lower component 2b. These two releasable connectors are symmetrically arranged in the lower part 2 and are connected to the tensioning belt 4 by an inner belt (not shown). The releasable connectors are designed to be connected to fixed anchoring points provided in the vehicle the child safety seat is installed in, such as ISOFIX anchors. With the releasable connectors the child safety seat can be fixed to the seat of a vehicle. When the child safety seat is being installed in the vehicle, the locking device 5 is unlocked so that the releasable connectors can be pulled from the retracted position shown in Figure 1b to an extended position. In the extended position, the releasable connectors can be easily and conveniently connected to the fixed anchoring points of the vehicle. Next, the locking device 5 gets locked and by pulling on the tensioning belt 4 the releasable connectors are pulled back from their extended position towards their retracted position. During this process, the child safety seat will be pushed towards the seatback of the vehicle seat it is installed on until it is firmly installed on the seat.

Figure 2 is a perspective view of the lower part 2 of the child safety seat of Figures 1a and 1b with the upper component 2a of the lower part 2 of the child safety seat removed. Therefore, Figure 2 only shows the lower component 2b of the lower part 2. Furthermore, Figure 2 shows how the inner belt 7 is routed inside the lower part 2 of the child safety seat. The middle section of the inner belt 7 is housed inside the lower component 2b, whereas both ends of the inner belt 7 are guided through apertures 10 provided in the lower component 2b to the outside of the lower component 2b. These ends of the inner belt 7 are attached to the two releasable connectors 6. Furthermore, the inner belt 7 is connected in its central region to the tensioning belt 4. Therefore, a force acting on the tensioning belt 4, in particular a force pulling in the direction indicated by arrow 20, will be transferred via the inner belt 7 to the releasable connectors 6. As a result, by pulling on the tensioning belt 4 in the direction of arrow 20, the releasable connectors 6 will be pulled towards the lower component 2b as indicated by arrows 21.

The lower component 2b comprises deflection elements 8a, 8b around which the inner belt 7 is guided. In particular, the lower component 2b comprises two outer deflection elements 8a and two inner deflection elements 8b. The outer deflection elements 8a are arranged near the front corners of the lower component 2b and the inner deflection elements 8b are arranged closer to the center of the lower component 2b. As a result, on its way from the point of attachment to the tensioning belt 4 to the releasable connector 6, the inner belt 7 is first guided towards the back of the lower component 2b by the inner deflection element 8b, then guided towards the front of the lower component 2b by the outer deflection element 8b, and finally guided through the aperture 10 to the outside of the lower component 2b. At the same time, the inner belt 7 is guided by the deflection elements 8a, 8b from the central part of the lower component 2b to the lateral part of the lower component 2b. This routing of the inner belt 7 has the effect that, when the tensioning belt 4 is pulled in direction 20, the pulled path is transferred almost completely to the connectors 6 which are pulled towards the lower component 2b in direction 21.

The deflection elements 8a, 8b are not completely rigid but instead exhibit a certain degree of elasticity or resilience. In the embodiment of the invention shown in Figure 2 the deflection elements 8a, 8b are fixedly attached to the lower component 2b and are designed to be bent from their normal erect position to a deflected position by deflection forces acting on the deflection elements 8a, 8b. These deflection forces can be exerted on the deflection elements 8a, 8b by the inner belt 7. When a force is applied to the releasable connectors 6 in a direction opposite to arrows 21, i.e. when the releasable connectors 6 are pulled backwards, this force is transferred to the inner belt 7. Since the tensioning belt 4 is locked by the locking device 5 which prevents the tensioning belt 4 from being pulled into the lower component 2b (i.e. in the direction opposite to arrow 20), the forces acting on the inner belt 7 tension the inner belt 7, thus creating a certain tension in the inner belt 7 and exerting deflection forces on the deflection elements 8a, 8b. As a result, the deflection elements 8a, 8b will be bent. During this process, energy is absorbed by the bending of the deflection elements 8a, 8b. Therefore, in this embodiment of the invention, the deflection elements 8a, 8b also represent deformable members. Furthermore, friction between the inner belt 7 and the deflection elements 8a, 8b reduces the tension acting on the tensioning belt 4.

As a result, in the lower part 2 of the child safety seat shown in Figure 2 the releasable connectors 6 are not rigidly attached to the lower component 2b, but can be pulled from the lower component 2b to a certain extent, even when the tensioning belt 4 is locked. This is realized by making the deflection elements 8a, 8b bendable. Alternatively or in addition, the inner belt 7 itself might exhibit a certain degree of elasticity or resilience.

A child safety seat comprising the lower part 2 shown in Figure 2 can significantly reduce the maximum loads experienced by a child sitting in the child safety seat during a front crash of the vehicle carrying the child safety seat. This reduction of loads is achieved by the way the releasable connectors are attached to the lower component 2b. During a front crash, the vehicle is heavily decelerated. This deceleration experienced by the vehicle is transferred to the child safety seat via the releasable connectors 6. Since the releasable connectors 6 are attached to the lower part 2 by means of an inner belt 7 which is routed inside the lower part 2 as described above, the deceleration is not immediately and directly transferred to the child safety seat, but instead in a delayed and reduced manner, thus reducing the loads acting on the child safety seat and on the child.

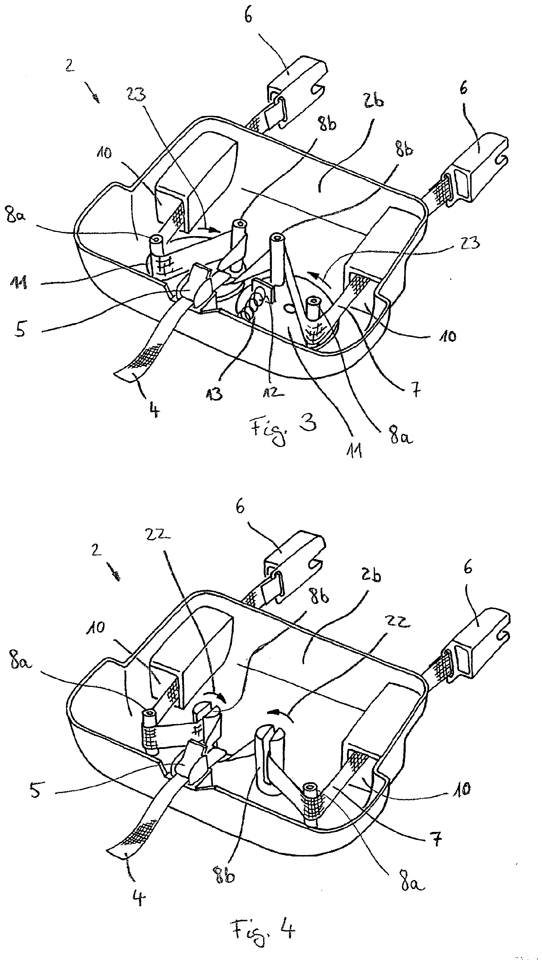

In the embodiments of the invention shown in Figures 3-6 the same or a similar effect is achieved with alternative designs of the deflection elements, the deformable members, or the inner belt. The components of the child safety seats shown in Figures 3-6 which are not explicitly mentioned in the following description of these Figures conform to the corresponding components of the child safety seat shown in Figure 2. Only those features distinguishing the child safety seats of Figures 3-6 from the child safety seat of Figure 2 will be described in detail.

In the embodiment of the invention shown in Figure 3 the lower component 2b of the lower part 2 of the child safety seat comprises two rotary plates 11 which are rotatably attached to the lower component 2b. An outer deflection element 8a and an inner deflection element 8b is mounted to each of these rotary plates 11. These deflection elements 8a, 8b might be rigid or they might be resilient as described in the context of Figure 2. Each rotary plate 11 furthermore comprises a prop 12 which is fixedly mounted to the respective rotary plate 11. Furthermore, a spring 13 is associated with each rotary plate 11. In Figure 3 only one prop 12 and one spring 13 is visible since the other prop and the other spring are hidden by the tensioning belt 4 and the locking device 5. The spring 13 is arranged between the prop 12 and the front wall of the lower component 2b. With the springs 13 the right rotary plate 11 shown in Figure 3 is biased in the clockwise direction, whereas the left rotary plate 11 shown in Figure 3 is biased in the counter-clockwise direction.

When the releasable connectors 6 are pulled backwards (i.e. away from the lower component 2b), the pulling forces transferred to the inner belt 7 cause the rotary plates 11 to rotate against the force of the respective spring 13, i.e. the right rotary plate 11 rotates counter-clockwise, whereas the left rotary plate 11 rotates clockwise, as indicated by arrows 23. As a result, the releasable connectors 6 can be pulled away from the lower part 2 of the child safety seat in a controlled way. As described in the context of Figure 2, this allows the maximum load experienced by a child sitting in the child safety seat during a front crash to be reduced.

In the embodiment of the invention shown in Figure 4 the lower component 2b of the lower part 2 of the child safety seat comprises two inner deflection elements 8b which are configured to absorb energy by being twisted. Each inner deflection element 8b comprises a slot which is adapted to receive a section of the inner belt 7. When no load is applied to the inner belt 7 guided through the slots of the inner deflection elements 8b, the slots are essentially oriented longitudinally with respect to the lower component 2b. When the releasable connectors 6 are pulled backwards, the pulling forces are transferred via the inner belt 7 to the inner deflection elements 8b which, as a result of these forces, are twisted in the direction indicated by arrows 22. This twisting of the inner deflection elements 8b is conveniently employed to absorb impact energy, thus reducing impact loads.

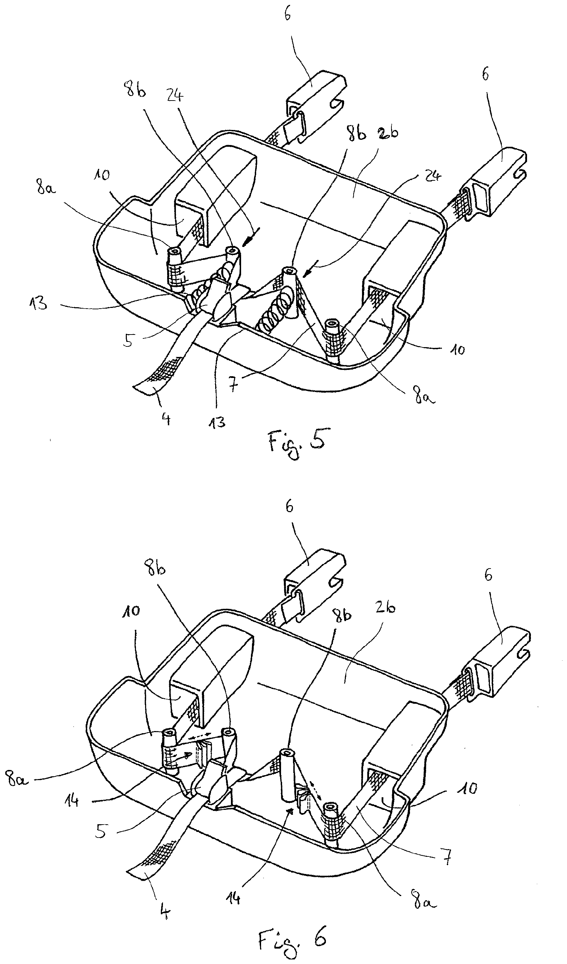

In the embodiment of the invention shown in Figure 5 the lower component 2b of the lower part 2 of the child safety seat comprises two inner deflection elements 8b which are slidably mounted to the lower component 2b. The inner deflection elements 8b are configured to be slidable in the longitudinal direction with respect to the lower component 2b. Furthermore, the lower component 2b comprises two springs 13 which are arranged between the inner deflection elements 8b and the front wall of the lower component 2b and are adapted to push the inner deflection elements 8b towards the back of the lower component 2b. Consequently, when the releasable connectors 6 are pulled backwards, the inner deflection elements 8b are pushed forward against the spring load of the springs 13, as indicated by arrows 24. As a result, impact load during a front impact will be reduced.

In the embodiment of the invention shown in Figure 6 the inner belt 7 comprises two ripping sections 14. In each of these ripping sections 14 the inner belt 7 is folded into loops which are connected to each other at their base, for example by stitching. The connection of the loops is strong enough to sustain forces experienced by the inner belt 7 during normal operation of the child safety seat, for example when the inner belt 7 is tensioned via the tensioning belt 4 during installation of the child safety seat in a vehicle. The connection of the loops is configured to break, however, as soon as the tension of the inner belt 7 exceeds a predetermined value. Breaking the connection of the loops will absorb energy. This effect is conveniently employed to reduce impact forces during a front crash. While in the configuration of Figure 6 the ripping sections 14 are positioned between the outer deflection elements 8a and the inner deflection elements 8b, the ripping sections 14 might advantageously be located in other sections of the inner belt 7, for example in the vicinity of the apertures 10 or in the vicinity of the tensioning belt 4.

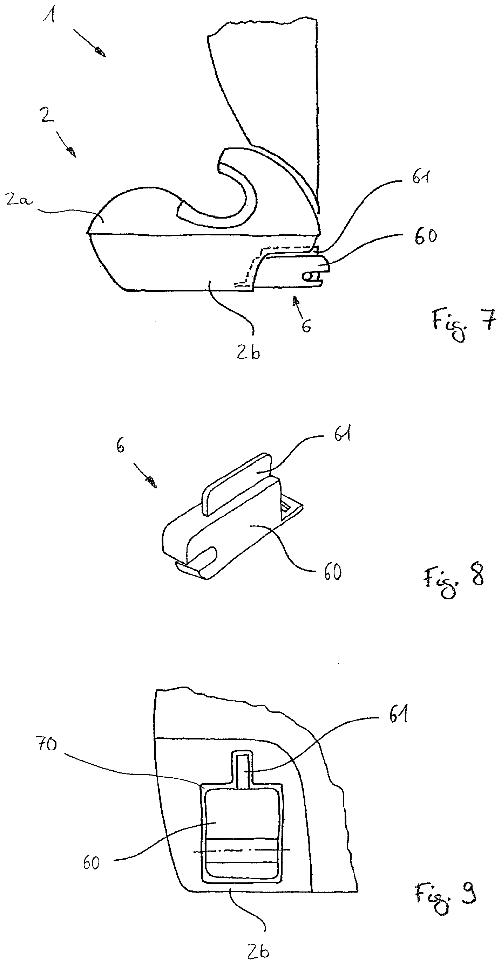

Figures 7-10d illustrate another aspect of the present invention.

In Figure 7 a section of a child safety seat in accordance with another embodiment of the invention is shown which comprises a lower part 2 as described in the context of Figures 1a-6. The lower part 2 comprises an upper component 2a and a lower component 2b. The child safety seat 1 comprises a releasable connector 6 which is slidably mounted to the lower component 2b. The releasable connector 6 comprises a body 60 and a guiding member 61. The guiding member 61 is firmly mounted to the body 60 of the releasable connector 6.

In Figure 7 the releasable connector 6 is fully retracted into the lower component 2b. For certain vehicle seats with a specific geometry, this position of the releasable connector 6 might be suitable for correctly installing the child safety seat 1 on the vehicle seat. Other vehicle seats with different geometries, however, might require the releasable connector 6 to extend further from the lower component 2b in order to correctly install the child safety seat 1 on the vehicle seat. The guiding member 61 of the releasable connector 6 allows the releasable connector 6 to be extended from the lower component 2b in a convenient and reliable way. Furthermore, the guiding member 61 laterally couples the releasable connector 6 to the lower component 2b in such a way that lateral forces acting on the releasable connector 6 are transferred to the lower component 2b. Thus, with the child safety seat of Figure 7 lateral forces acting on the releasable connector 6 can be transferred to the lower component 2b in a controlled way so that the child safety seat 1 as a whole can be configured to help reduce occupant loads even in a crash configuration involving a side impact.

Figure 8 shows a perspective view of the releasable connector 6 of Figure 7. The guiding member 61 is a fin-like ridge which is mounted on top of the body 60 of the releasable connector 6 and extends in a longitudinal direction.

Figure 9 shows that the lower component 2b comprises an aperture 70 which is configured to receive the releasable connector 6. The cross section of the aperture 70 is adapted to the cross section of the releasable connector 6. In particular, the upper part of the aperture 70 is configured to closely enclose the guiding member 61 in order to provide for a reliable load transmission between releasable connector 6 and lower component 2b.

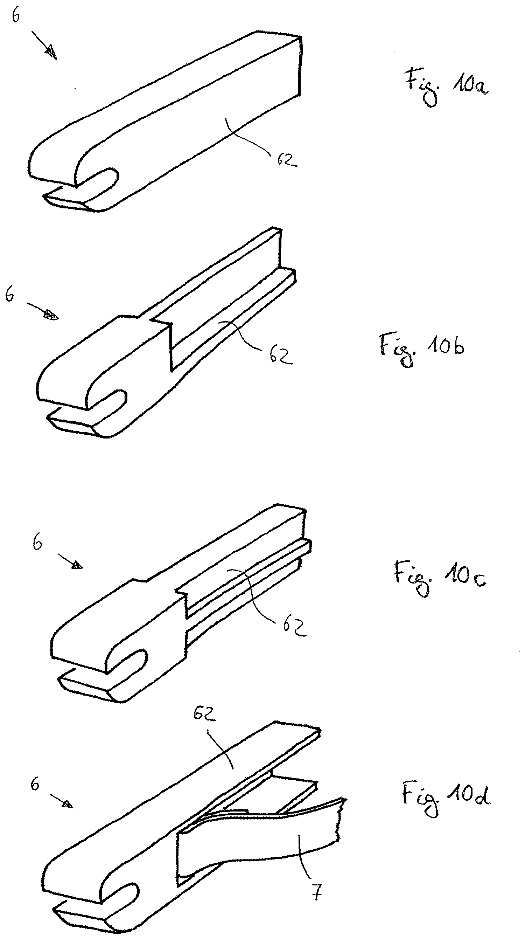

Figures 10a-10d show releasable connectors 6 in accordance with further embodiments of the invention. The releasable connector 6 shown in Figure 10a comprises a guiding section 62 with a rectangular cross section. The releasable connector 6 shown in Figure 10b comprises a guiding section 62 with a T-shaped cross section. The releasable connector 6 shown in Figure 10c comprises a guiding section 62 with a cross shaped cross section. The releasable connector 6 shown in Figure 10d comprises a guiding section 62 with a U-shaped cross section. For each of these releasable connectors 6, the corresponding lower component 2b of a child safety seat advantageously comprises an aperture whose cross section is adapted to the cross section of the guiding section 62 of the respective releasable connector 6. Lateral and vertical forces acting on the releasable connector 6 can then be transferred reliably to the lower component 2b.

### List of reference numerals:

- 1: child safety seat
- 2: lower part of child safety seat, base portion
- 2a: upper component
- 2b: lower component
- 3: hinge section
- 4: tensioning belt
- 5: locking device
- 5a: outlet
- 6: releasable connector
- 7: inner belt
- 8: deflection elements
- 8a: outer deflection element
- 8b: inner deflection element
- 9: connector retainer
- 10: aperture
- 11: rotary plate
- 12: prop
- 13: spring
- 14: ripping section
- 20: pulling direction for tensioning
- 21: tensioning direction
- 22: torsioning direction
- 23: rotating direction
- 24: sliding direction
- 60: body of releasable connector 6
- 61: guiding member
- 62: guiding section
- 70: aperture for receiving releasable connector 6

## Claims

1. A child safety seat (1) comprising
- a base portion (2) configured to support a child,
- a releasable connector (6) configured to be attached to an anchoring point provided in a vehicle in order to secure the child safety seat (1) to the vehicle, and
- a flexible attachment means (7) connecting the releasable connector (6) to the base portion (2),
wherein the child safety seat (1) comprises a deformable member (8, 13, 14) which is configured to be deformed upon application of a pulling force exceeding a preset threshold on the releasable connector (6) in a direction facing away from the base portion (2),wherein the pulling force is at least partially transferred to the deformable member (8, 13, 14) via the flexible attachment means (7),
**characterized in that**
the base portion (2) comprises deflection elements (8a, 8b) around which the flexible attachment means (7) is guided.

2. The child safety seat (1) of claim 1, wherein the deformable member (13) is configured to interact with at least one of the deflection elements (8a, 8b).

3. The child safety seat (1) of claim 1 or 2, wherein the deformable member (8) is integrated into at least one of the deflection elements (8a, 8b).

4. The child safety seat (1) of any one of claims 1 to 3, wherein at least one of the deflection elements (8a, 8b) is configured to be displaceable in such a way that by displacing the deflection element (8a, 8b) the deformable member (13) gets deformed.

5. The child safety seat (1) of any one of claims 1 to 4, wherein the deflection elements (8a, 8b) are mounted on a spring loaded rotary member (11).

6. The child safety seat (1) of any one of claims 1 to 5, wherein the deflection elements (8a, 8b) comprise a twistable slotted member.

7. The child safety seat (1) of any one of claims 1 to 6, wherein the deflection elements (8a, 8b) comprise a slidable spring loaded member.

8. The child safety seat (1) of any one of the preceding claims, wherein the deformable member (14) is integrated into the flexible attachment means (7).

9. The child safety seat (1) of any one of the preceding claims, wherein the deformable member (14) comprises a spring or a foam-like structure.

10. The child safety seat (1) of any one of the preceding claims, wherein the flexible attachment means (7) comprises a section (14) which is extendable upon application of a tension exceeding a predetermined value.

11. The child safety seat (1) of any one of the preceding claims, wherein the releasable connector (6) comprises a guiding member (61) which is slidably guided in the base portion (2) and which is configured to interact with the base portion (2) in such a way that lateral and/or vertical forces acting on the releasable connector (6) are transferred from the releasable connector (6) via the guiding member (61) to the base portion (2).

## Patentansprüche

1. Kindersitz (10), der aufweist:
einen Basisabschnitt (2), der dazu konfiguriert ist, ein Kind zu stützen,
ein lösbares Verbindungsteil (6), das dazu konfiguriert ist, an einem Ankerpunkt befestigt zu werden, der in einem Fahrzeug vorgesehen ist, um den Kindersitz (1) an dem Fahrzeug zu sichern, und
ein flexibles Befestigungsmittel (7), das das lösbare Verbindungsteil (6) mit dem Basisabschnitt (2) verbindet,
wobei der Kindersitz (1) ein verformbares Element (8, 13, 14) aufweist, das dazu konfiguriert ist, bei Aufbringen einer Zugkraft, die einen vorgegebenen Schwellenwert übersteigt, auf das lösbare Verbindungsteil (6) in einer von dem Basisabschnitt (2) weg weisenden Richtung deformiert zu werden, wobei die Zugkraft wenigstens teilweise über das flexible Befestigungsmittel (7) auf das verformbare Element (8, 13, 14) übertragen wird,
**dadurch gekennzeichnet, dass**
der Basisabschnitt (2) Ablenkelemente (8a, 8b) aufweist, um welche das flexible Befestigungsmittel (7) geführt wird.

2. Kindersitz (1) nach Anspruch 1, wobei das verformbare Element (13) dazu konfiguriert ist, mit wenigstens einem der Ablenkelemente (8a, 8b) zusammenzuwirken.

3. Kindersitz (1) nach Anspruch 1 oder 2, wobei das verformbare Element (8) in wenigstens eines der Ablenkelemente (8a, 8b) integriert ist.

4. Kindersitz (1) nach einem der Ansprüche 1 bis 3, wobei wenigstens eines der Ablenkelemente (8a, 8b) dazu konfiguriert ist, derart verschiebbar zu sein, dass durch Verschieben des Ablenkelements (8a, 8b) das verformbare Element (13) verformt wird.

5. Kindersitz (1) nach einem der Ansprüche 1 bis 4, wobei die Ablenkelemente (8a, 8b) an einem federbelasteten Drehelement (11) angebracht sind.

6. Kindersitz (1) nach einem der Ansprüche 1 bis 5, wobei die Ablenkelemente (8a, 8b) ein verdrehbares geschlitztes Element aufweisen.

7. Kindersitz (1) nach einem der Ansprüche 1 bis 6, wobei die Ablenkelemente (8a, 8b) ein verschiebbares federbelastetes Element aufweisen.

8. Kindersitz (1) nach einem der vorhergehenden Ansprüche, wobei das verformbare Element (14) in das flexible Befestigungsmittel (7) integriert ist.

9. Kindersitz (1) nach einem der vorhergehenden Ansprüche, wobei das verformbare Element (14) eine Feder oder eine schaumstoffartige Struktur aufweist.

10. Kindersitz (1) nach einem der vorhergehenden Ansprüche, wobei das flexible Befestigungsmittel (7) einen Abschnitt (14) aufweist, der bei Aufbringen eines Zugs, der einen vorgegebenen Wert überschreitet, ausziehbar ist.

11. Kindersitz (1) nach einem der vorhergehenden Ansprüche, wobei das lösbare Verbindungsteil (6) ein Führungselement (61) aufweist, das verschiebbar in dem Basisabschnitt (2) geführt ist, und das dazu konfiguriert ist, mit dem Basisabschnitt (2) derart zusammenzuwirken, dass seitliche und/oder vertikale Kräfte, die auf das lösbare Verbindungsteil (6) wirken, von dem lösbaren Verbindungsteil (6) über das Führungselement (61) an den Basisabschnitt (2) übertragen werden.

## Revendications

1. Siège de sécurité enfant (1) comprenant :
- une partie de base (2) conçue pour supporter un enfant,
- un connecteur libérable (6) configuré pour être fixé à un point d'ancrage prévu dans un véhicule afin de sécuriser le siège de sécurité enfant (1) au véhicule, et
- un moyen de fixation flexible (7) reliant le connecteur libérable (6) à la partie de base (2),
dans lequel le siège de sécurité enfant (1) comprend un élément déformable (8, 13, 14) qui est conçu pour être déformé lors de l'application d'une force de traction dépassant un seuil prédéfini sur le connecteur libérable (6) dans un sens opposé à la partie de base (2), la force de traction étant au moins partiellement transférée à l'élément déformable (8, 13, 14) par le biais du moyen de fixation flexible (7),
**caractérisé en ce que**
la partie de base (2) comprend des éléments de déflexion (8a, 8b) autour desquels le moyen de fixation flexible (7) est guidé.

2. Siège de sécurité enfant (1) selon la revendication 1, dans lequel l'élément déformable (13) est conçu pour interagir avec au moins un des éléments de déflexion (8a, 8b).

3. Siège de sécurité enfant (1) selon la revendication 1 ou 2, dans lequel l'élément déformable (8) est intégré dans au moins un des éléments de déflexion (8a, 8b).

4. Siège de sécurité enfant (1) selon l'une quelconque des revendications 1 à 3, dans lequel au moins un des éléments de déflexion (8a, 8b) est conçu pour être déplaçable de telle sorte qu'en déplaçant l'élément de déflexion (8a, 8b), l'élément déformable (13) soit déformé.

5. Siège de sécurité enfant (1) selon l'une quelconque des revendications 1 à 4, dans lequel les éléments de déflexion (8a, 8b) sont montés sur un élément rotatif chargé par ressort (11).

6. Siège de sécurité enfant (1) selon l'une quelconque des revendications 1 à 5, dans lequel les éléments de déflexion (8a, 8b) comprennent un élément fendu pouvant être tordu.

7. Siège de sécurité enfant (1) selon l'une quelconque des revendications 1 à 6, dans lequel les éléments de déflexion (8a, 8b) comprennent un élément chargé par ressort pouvant coulisser.

8. Siège de sécurité enfant (1) selon l'une quelconque des revendications précédentes, dans lequel l'élément déformable (14) est intégré dans le moyen de fixation flexible (7).

9. Siège de sécurité enfant (1) selon l'une quelconque des revendications précédentes, dans lequel l'élément déformable (14) comprend un ressort ou une structure en forme de mousse.

10. Siège de sécurité enfant (1) selon l'une quelconque des revendications précédentes, dans lequel le moyen de fixation flexible (7) comprend une section (14) qui peut s'étendre lors de l'application d'une tension dépassant une valeur prédéterminée.

11. Siège de sécurité enfant (1) selon l'une quelconque des revendications précédentes, dans lequel le connecteur libérable (6) comprend un élément de guidage (61) qui est guidé de manière coulissante dans la partie de base (2) et qui est configuré pour interagir avec la partie de base (2) de telle sorte que des forces verticales et/ou latérales agissant sur le connecteur libérable (6) soit transférées à partir du connecteur libérable (6) par le biais de l'élément de guidage (61) à la partie de base (2).
